# EUROPEAN PATENT SPECIFICATION

(11) **EP 1 467 456 B1**
(45) Date of publication and mention of the grant of the patent: **09.03.2011**
(21) Application number: 04425184.1
(22) Date of filing: 17.03.2004
(51) Int. Cl.: H02G 3/20, F21S 8/06, F21V 21/008, F21V 27/00, H01R 33/46

(54) **Cable-retainer apparatus**
Kabelhalterung
Dispositif de retenue de câbles

(30) Priority: 07.04.2003 IT fi20030093
(43) Date of publication of application: 13.10.2004
(73) Proprietor: VERDA s.r.l., 50141 Firenze (IT)
(72) Inventor: Pini, Belisario, 50141 Firenze (IT)
(74) Representative: Strasser, Wolfgang

(56) References cited:
- US-A- 1 700 538

## Description

The present invention refers to a cable-retainer apparatus.

In particular, the apparatus in question results advantageously, although not exclusively, useful in performing a function for both the blockage and anchorage of a cord or tension rod for suspended chandeliers or lamps.

US-A-1700538 discloses a socket for electric-light globes comprising two elements cooperating with each other for locking one or more cables. The said elements delimit two longitudinal inner passages for the electric cables.

An apparatus according to the invention, as defined in claim 1 and in the independent claims, allows carrying out a fast and safe retention of electric cables intended for supplying power to suspended chandeliers or lamps and, at the same time, fixedly and effectively anchoring the relevant suspension rod.

Besides, an apparatus according to the invention is easy to make, cost-effective, reliable also after a prolonged service life and utilizable with no difficulty by anybody.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a view in longitudinal section of an apparatus, according to the invention, with the same apparatus being shown in use;

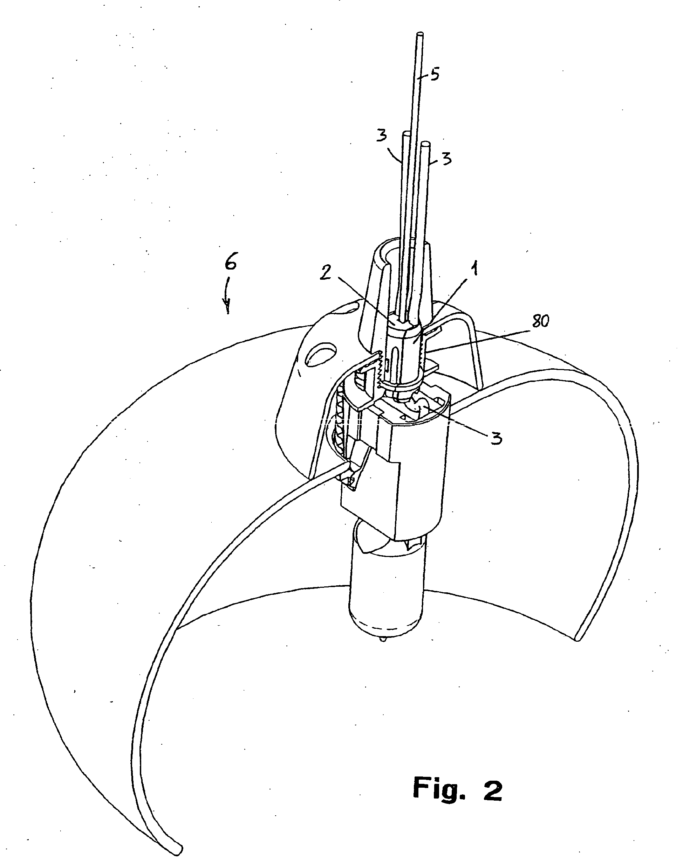

- Fig. 2 is a schematic perspective view of a suspended lamp provided with the apparatus of Fig. 1;
- Figs. 3-5 show a sequence of consecutive steps for the assembly of an apparatus according to the invention;
- Fig. 6 shows the apparatus of Fig. 5 partially sectioned to highlight the inside thereof;
- Fig. 7 is a schematic exploded view of an apparatus according to the invention;
- Fig. 8 is a further view in longitudinal section of the apparatus in assembled condition;
- Fig. 9 is an enlarged view of a detail encircled in Fig. 8.

Reduced to its basic structure, and reference being made to the figures of the attached drawings, a cable-retainer apparatus according to the invention comprises two elements 1, 2 which, in cooperation with each other, define two inner longitudinal passages 10 for corresponding leads or electric cables 3 and a seat for anchoring the head section of a cord 5 (for example, a steel-made type commonly available on the market) intended to act as a tension rod for a suspended chandelier or lamp 6. The said head section 50 of tension rod 5 is cylindrical in shape and with a diameter larger than that of the same tension rod.

According to the example illustrated in the attached drawings, an element 1 of the apparatus has the longitudinal passages for cable 3 separated from each other by a median septum 31 of suitable length, the other element 2 of the apparatus exhibiting the said seat 4 for the anchorage of the tension rod 5 and a passage 20, as well, for a portion of the tension rod 5 adjacent to the head section 50.

In the illustrated example, the said septum 31 has a substantially trapezoidal profile, with the major base 32 forming one body with the inner wall of the element 1: the minor base 33 of the septum 31 being then positioned within the passage 20 provided by the other element 2 of the apparatus, so as to cause the tension rod 5 to form a loop inside the apparatus itself.

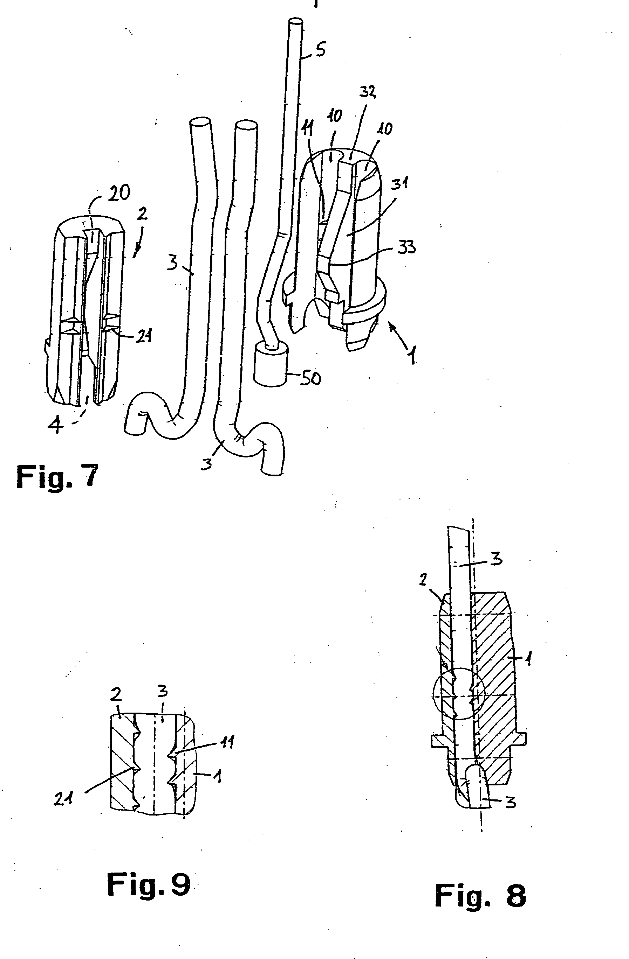

The said elements 1, 2 are also provided with a plurality of transverse septa 11, 21 intended to result respectively staggered (as shown by the detail of Fig. 9) to block the cables 3 and preventing them from sliding within the relevant passages 10 when the apparatus is in use.

Both said elements 1, 2 can be made from electrically insulating material, such as a plastics material of PPS type, by means of the moulding technique.

The tightening of the cables 3 is achieved by blocking the elements 1, 2 of the apparatus to each other, in a manner such as that described below.

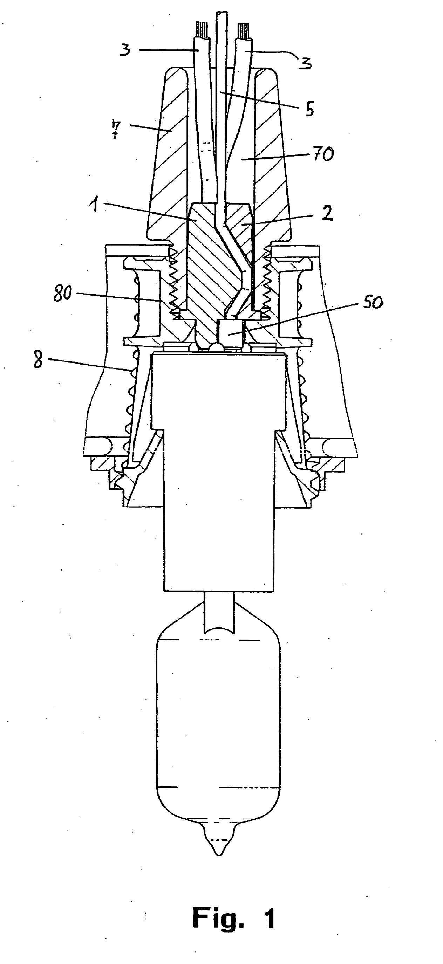

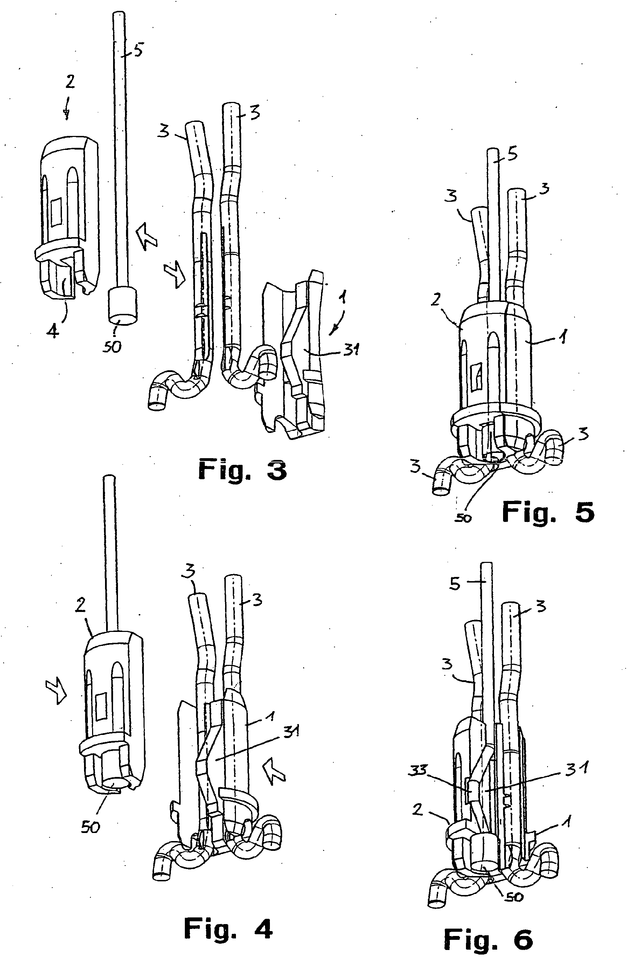

The assembly is carried out as follows.
The cables 3 are positioned in the passages 10 of the element 1, while the tension rod 5 is positioned so that the head section 50 will result within the seat 4 formed in the element 2 (see Fig. 3). Then, the two elements 1, 2 are moved close to each other, so that the septum 31 of element 1 will result within the passage 20 formed in the element 2 (see Figs. 4, 5 and 6). At this point, the two elements 1, 2 are forced into the cavity 70 of a sleeve 7 which, in its turn, is screwed in the base ring nut 80 of a lamp holder 8 (see Fig. 1). According to this example, the interlock of the elements 1, 2 is obtained by positioning the latter within the sleeve which tightens them.

## Claims

1. Cable-retainer apparatus comprising two elements (1, 2) cooperating with each other for locking one or more electric cables (3), the said elements (1, 2) delimiting two longitudinal inner passages (10) for the electric cables (3), **characterized in that** the said elements (1, 2) further delimit a seat (4) for anchoring head section (50) of a cord or tension rod (5) intended for suspending a chandelier or a lamp (6).

2. Apparatus according to claim 1, **characterized in that** the said head section (50) of tension rod (5) has a cylindrical shape and a diameter larger than that of the same tension rod.

3. Apparatus according to claim 1, **characterized in that** an element (1) of the apparatus has the longitudinal passages for cables (3) separated from each other by a median septum (31) of suitable length, the other element (2) of the apparatus exhibiting the said seat (4) for the anchorage of the tension rod (5) and a passage (20), as well, for a portion of the tension rod (5) adjacent to the head section (50).

4. Apparatus according to claims 1 and 3, **characterized in that** the said septum (31) has a substantially trapezoidal profile, with the major base (32) forming one body with the inner wall of the element (1): the minor base (33) of the septum (31) being apt to be positioned within the passage (20) provided by the other element (2) of the apparatus, so as to cause the tension rod (5) to form a loop inside the apparatus itself.

5. Apparatus according to claim 1, **characterized in that** the said elements (1, 2) are provided with a plurality of staggered transverse septa (11, 21) intended to block the cables (3) and preventing them from sliding within the respective passages (10) when the apparatus is in use.

6. Apparatus according to one or more of the preceding claims, **characterized in that** the said elements (1, 2) are interlocked by positioning them within the cavity of an external sleeve (7).

## Patentansprüche

1. Kabelhalterung, die zwei Elemente (1, 2) umfasst, die miteinander zusammenwirken, um ein oder mehrere elektrische Kabel (3) festzuhalten, wobei die Elemente (1, 2) zwei sich in Längsrichtung erstreckende innere Durchgänge (10) für die elektrischen Kabel (3) begrenzen, **dadurch gekennzeichnet, dass** die Elemente (1, 2) weiterhin einen Sitz (4) zum Verankern des Kopfabschnittes (50) einer Schnur oder eines Zugstabes (5) umgrenzen, die dazu dient, einen Leuchter oder eine Lampe (6) aufzuhängen.

2. Vorrichtung nach Anspruch 1, **dadurch gekennzeichnet, dass** der Kopfabschnitt (50) des Zugstabes (5) eine zylindrische Form und einen Durchmesser besitzt, der größer ist, als der des Zugstabes.

3. Vorrichtung nach Anspruch 1, **dadurch gekennzeichnet, dass** in dem einen Element (1) der Vorrichtung die sich in Längsrichtung erstreckenden Durchgänge für die Kabel (3) durch eine mittlere Scheidewand (31) geeigneter Länge voneinander getrennt sind, wobei das andere Element (2) der Vorrichtung den Sitz (4) für die Verankerung des Zugstabes (5) und auch einen Durchgang (20) für einen Teil des Zugstabes (5) in der Nachbarschaft des Kopfabschnittes (50) aufweist.

4. Vorrichtung nach Anspruch 1 und 3, **dadurch gekennzeichnet, dass** die Scheidewand (31) ein im Wesentlichen trapezoidales Profil aufweist, wobei die größere Basis (32) einen Körper mit der Innenwand des Elementes (1) bildet und die kleinere Basis (33) der Scheidewand (31) im Durchgang (20) positioniert werden kann, der in dem anderen Element (2) der Vorrichtung vorgesehen ist, um so zu bewirken, dass der Zugstabe (15) innerhalb der Vorrichtung selbst einen gekrümmten Verlauf erhält.

5. Vorrichtung nach Anspruch 1, **dadurch gekennzeichnet, dass** die Elemente (1, 2) mit einer Vielzahl von gestaffelten, quer verlaufenden Scheidewänden (11, 21) versehen sind, die dazu dienen die Kabel (3) zu blockieren und sie daran zu hindern, innerhalb des entsprechenden Durchgangs (10) zu verrutschen, wenn die Vorrichtung verwendet wird.

6. Vorrichtung nach einem oder mehreren der vorhergehenden Ansprüche, **dadurch gekennzeichnet, dass** die Elemente (1, 2) **dadurch** miteinander verriegelt werden, dass sie im Hohlraum einer äußeren Hülse (7) angeordnet werden.

## Revendications

1. Dispositif de blocage pour câbles comprenant deux éléments (1,2) coopérants entre eux pour bloquer un ou plusieurs câbles électriques, où lesdits éléments (1,2) délimitent deux passages longitudinaux internes (10) pour les câbles électriques (3), **caractérisé en ce que** lesdits éléments (1,2) délimitent aussi un siège (4) pour l'ancrage d'une section de tête (50) d'une cordelette ou tirant (5) destiné à la suspension d'un lustre ou d'une lampe en suspension (6).

2. Dispositif selon la revendication 1 **caractérisé en ce que** la section de tête (50) du tirant (5) a une forme cylindrique, de diamètre majeur par rapport au diamètre du tirant même.

3. Dispositif selon la revendication 1 **caractérisé en ce que** un élément (1) du dispositif présente les passages longitudinaux pour les câbles (3), séparés entre eux par un septum médian (31) de longueur appropriée, l'autre élément (2) du dispositif en présentant ledit siège (4) pour l'ancrage du tirant (5) et en présentant, en outre, un passage (20) pour une portion du tirant (5) adjacente à la section de tête (50).

4. Dispositif selon les revendications 1 e 3 **caractérisé en ce que** ledit septum (31) est à profil fondamentalement trapézoïdal, avec la base majeure (32) qui forme un corps unique avec la paroi interne d'un élément (1) : la base mineure (33) du septum (31) étant destinée à être positionnée dans le passage (20) présenté par l'autre élément (2) du dispositif , de manière à obliger le tirant (5) à former une anse à l'intérieur du dispositif même.

5. Dispositif selon la revendication 1 **caractérisé en ce que** lesdits éléments (1,2) présentent une pluralité de septa transversaux (11,21) destinés à résulter respectivement décalés pour bloquer les câbles (3) et en empêcher le glissement dans les passages respectifs (10) lorsque le dispositif est en assiette d'usage.

6. Dispositif selon une ou plusieurs des revendications précédentes **caractérisé en ce que** lesdits éléments (1,2) sont bloqués entre eux par positionnement dans la cavité d'un manchon externe (7).
